(19) Europäisches Patentamt
European Patent Office
Office européen des brevets

(11) Veröffentlichungsnummer : **0 087 677**
**B1**

(12) **EUROPÄISCHE PATENTSCHRIFT**

(45) Veröffentlichungstag der Patentschrift : **17.07.85**

(51) Int. Cl.⁴ : **C 09 B 29/039**// C09B29/06, C09B29/36, D06P3/36

(21) Anmeldenummer : **83101451.9**

(22) Anmeldetag : **16.02.83**

# (54) Isothiazolazofarbstoffe.

(30) Priorität : **27.02.82 DE 3207209**

(43) Veröffentlichungstag der Anmeldung : **07.09.83 Patentblatt 83/36**

(45) Bekanntmachung des Hinweises auf die Patenterteilung : **17.07.85 Patentblatt 85/29**

(84) Benannte Vertragsstaaten : **CH DE FR GB IT LI**

(56) Entgegenhaltungen :
**FR-A- 2 128 412**
**FR-A- 2 128 443**
**GB-A- 2 041 391**
**Die Akte enthält technische Angaben, die nach dem Eingang der Anmeldung eingereicht wurden und die nicht in dieser Patentschrift enthalten sind.**

(73) Patentinhaber : **BASF Aktiengesellschaft**
**Carl-Bosch-Strasse 38**
**D-6700 Ludwigshafen (DE)**

(72) Erfinder : **Bergmann, Udo, Dr.**
**Merckstrasse 26**
**D-6100 Darmstadt (DE)**
Erfinder : **Dix, Johannes Peter, Dr.**
**Ludwigshafener Strasse 125**
**D-6708 Neuhofen (DE)**
Erfinder : **Hansen, Guenter, Dr.**
**Alwin-Mittasch-Platz 8**
**D-6700 Ludwigshafen (DE)**
Erfinder : **Schefczik, Ernst, Dr.**
**Dubliner Strasse 7**
**D-6700 Ludwigshafen (DE)**

**EP 0 087 677 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft Verbindungen der allgemeinen Formel I

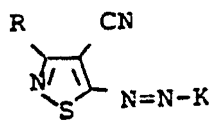

in der

R ein substituierter Alkylrest und

K der Rest einer von ungesättigten aliphatischen Resten freien Kupplungskomponente sind.

Reste R sind insbesondere durch Chlor, Brom, Cyan, Hydroxy, $C_1$- bis $C_4$-Alkoxy, Phenoxy, $C_1$- bis $C_8$-Alkoxycarbonyl oder gegebenenfalls substituiertes Phenyl substituiertes $C_1$- bis $C_4$-Alkyl.

Einzelne Reste R sind beispielsweise :

2-Chlorethyl, 2-Bromethyl, Cyanmethyl, 2-Cyanethyl, 2-Hydroxyethyl, 2-Methoxyethyl, 2-Ethoxyethyl, 2-Propoxyethyl, 2-Butoxyethyl, 2-Phenoxyethyl, Methoxycarbonylmethyl, Ethoxycarbonylmethyl, 2-Methoxycarbonylethyl, 2-Ethoxycarbonylethyl, Benzyl, Phenethyl, o-, m-, p-Methylbenzyl, o-, m-, p-Brombenzyl, o-, m-, p-Chlorbenzyl, o-, m-, p-Methoxybenzyl, o-, m-, p-Ethoxybenzyl oder o-, m-, p-Nitrobenzyl.

Die Kupplungskomponenten K entsprechen z. B. den Formeln

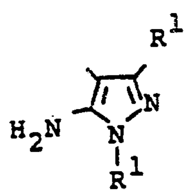

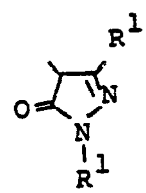

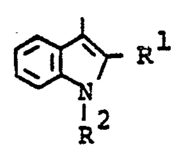

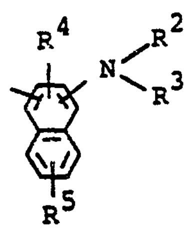

oder

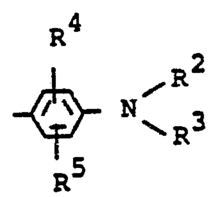

wobei

$R^1$ Wasserstoff, Alkyl, Aralkyl oder Aryl,

$R^2$ Wasserstoff oder $R^3$,

$R^3$ gegebenenfalls substituiertes Alkyl, Aralkyl oder Aryl und

$R^4$, $R^5$ Wasserstoff, Alkyl, Alkoxy, Phenoxy, Halogen, Alkylsulfonylamino, Dialkylaminosulfonylamino oder Acylamino sind.

Einzelne Reste $R^1$ sind neben den bereits genannten beispielsweise Methyl, Ethyl, Propyl, Butyl, Benzyl, Phenethyl, Phenyl, o-, m-, p-Tolyl oder o-, m-, p-Chlorphenyl.

Reste $R^3$ sind neben den bereits genannten z. B. $C_1$-$C_6$-Alkylgruppen, die durch Chlor, Brom, Hydroxy, $C_1$-$C_8$-Alkoxy, Phenoxy, Cyan, Carboxy, $C_1$-$C_8$-Alkanoyloxy, Benzoyloxy, o-, m-, p-Methylbenzoyloxy, o-, m-, p-Chlorbenzoyloxy, $C_1$-$C_4$-Alkoxyalkanoyloxy, Phenoxyalkanoyloxy, $C_1$-$C_8$-Alkoxycarbonyloxy, $C_1$-$C_8$-Alkoxyalkoxycarbonyloxy, Benzyloxycarbonyloxy, Phenethyloxycarbonyloxy, Phenoxyethoxycarbonyloxy, $C_1$-$C_8$-Alkylaminocarbonyloxy, Cyclohexylaminocarbonyloxy, Phenylaminocarbonyloxy, $C_1$-$C_8$-Alkoxycarbonyl, $C_1$-$C_8$-Alkoxyalkoxycarbonyl, Phenoxycarbonyl, Benzyloxycarbonyl oder Phenethyloxycarbonyl substituiert sein können, sowie Phenyl, Benzyl, Phenylethyl oder Cyclohexyl.

Einzelne Reste $R^3$ sind z. B. Methyl, Ethyl, Propyl, Butyl, Phenyl, Hexyl, 2-Chlorethyl, 2-Bromethyl, 2-Cyanethyl, 2-Hydroxyethyl, 2-Phenyl-2-hydroxyethyl, 2,3-Dihydroxypropyl, 2-Hydroxypropyl, 2-Hydroxybutyl, 2-Hydroxy-3-phenoxypropyl, 2-Hydroxy-3-methoxypropyl, 2-Hydroxy-3-butoxypropyl, 3-Hydroxypropyl, 2-Methoxyethyl, 2-Ethoxyethyl, 2-Propoxyethyl, 2-Butoxyethyl, 2-Phenoxyethyl, 2-Phenoxypropyl, 2-Acetoxyethyl, 2-Propionyloxyethyl, 2-Butyryloxyethyl, 2-Isobutyryloxyethyl, 2-Methoxymethylcarbonyloxyethyl, 2-Ethoxymethylcarbonyloxyethyl, 2-Phenoxymethylcarbonyloxyethyl, 2-Methoxycarbonyloxyethyl, 2-Ethoxycarbonyloxyethyl, 2-Propoxycarbonyloxyethyl, 2-Butoxycarbonyloxyethyl, 2-Phenyloxycarbonyloxyethyl, 2-Benzyloxycarbonyloxyethyl, 2-Methoxyethoxycarbonyloxyethyl, 2-Ethoxyethoxycarbonyloxyethyl, 2-Propoxyethoxycarbonyloxyethyl, 2-Butoxyethoxycarbonyloxyethyl, 2-Methylaminocarbonyloxyethyl, 2-Ethylaminocarbonyloxyethyl, 2-Propylaminocarbonyloxyethyl, 2-Butylaminocarbonyloxyethyl, 2-Methoxycarbonylethyl, 2-Ethoxycarbonylethyl, 2-Propoxycarbonylethyl, 2-Butoxycarbonylethyl, 2-Phenoxycarbonylethyl, 2-Benzyloxycarbonylethyl, 2-ß-Phenylethoxycarbonylethyl, 2-Methoxyethoxycarbonylethyl, 2-Ethoxyethoxycarbonylethyl, 2-Propoxyethoxycarbonylethyl, 2-Butoxyethoxycarbonylethyl, 2-Phenoxyethoxycarbonylethyl oder 2-Benzoylethyl.

Als Reste $R^4$ und $R^5$ kommen beispielsweise Wasserstoff, Methyl, Ethyl, Propyl, Brom, Chlor, Methoxy, Ethoxy, Phenoxy, Benzyloxy, $C_1$-$C_6$-Alkanoylamino, Benzoylamino sowie $C_1$-$C_4$-Alkylsulfonylamino oder Dialkylaminosulfonylamino in Betracht.

Zur Herstellung der Verbindungen der Formel I kann man Diazokomponenten der Formel

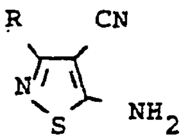

nach an sich bekannten Verfahren diazotieren und mit Verbindungen der Formel

H—K

umsetzen. Einzelheiten der Umsetzungen können den Beispielen entnommen werden, in denen sich Angaben über Teile und Prozente, sofern nicht anders vermerkt, auf das Gewicht beziehen.

Die Verbindungen der Formel I sind gelb bis blau und eignen sich zum Färben von Cellulosetriacetat und insbesondere von Polyestern, auf denen brillante, farbstarke Färbungen mit sehr guten Echtheiten, insbesondere hohen Lichtechtheiten, erhalten werden. Die Verwendung von Mischungen von Verbindungen der Formel I kann dabei vorteilhaft sein.

Gegenüber nächstvergleichbaren aus der FR-A-2 128 412 und der GB-A-2 041 391 bekannten Farbstoffen zeichnen sich die erfindungsgemäßen Verbindungen in unerwartetem Maße durch bessere thermische Echtheiten und Schweißechtheit nachfixierter Färbungen aus.

Von besonderer Bedeutung sind Verbindungen der Formel Ia

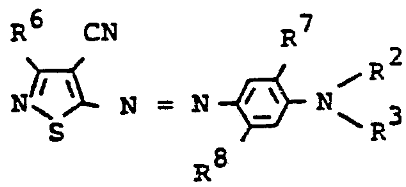

in der

$R^6$ Benzyl, Phenethyl, o-, m-, p-Chlorbenzyl, o-, m-, p-Methoxy- oder -Ethoxybenzyl oder o-, m-, p-Nitrobenzyl,

$R^7$ Wasserstoff, Methyl, Methoxy, Ethoxy oder Chlor und

$R^8$ Wasserstoff, Methyl, Methoxy, Chlor, Acetylamino, Propionylamino, Methylsulfonylamino oder Dimethylaminosulfonylamino sind und $R^2$ und $R^3$ die angegebene Bedeutung haben.

Bevorzugt sind für $R^2$ Wasserstoff oder $R^3$, wobei $R^3$ Methyl, Ethyl, Propyl, Butyl, ß-Cyanethyl, ß-Hydroxyethyl, $C_1$-$C_4$-Alkoxycarbonylmethyl, $C_1$-$C_4$-ß-Alkoxycarbonyloxyethyl, $C_1$-$C_4$-Alkanoyloxyethyl, $C_1$-$C_4$-Alkoxycarbonyloxyethyl, $C_1$-$C_4$-Alkylaminocarbonyloxyethyl, Phenylaminocarbonyloxyethyl sowie Benzyl oder Phenethyl ist.

## Beispiel 1

21,5 Teile 5-Amino-3-benzyl-4-cyan-isothiazol wurden in 150 Teilen Eisessig/Propionsäure (3 : 1) und 70 Teilen 85 %iger Schwefelsäure gelöst, bei 0-5 °C langsam mit 32 Teilen Nitrosylschwefelsäure (11,5 % $N_2O_3$) versetzt und 4 Stunden bei 0-5 °C nachgerührt.

17,4 Teile N-Cyanethyl-N-ethylanilin wurden in ein Gemisch aus 330 Teilen Wasser, 35 Teilen konzentrierter Salzsäure und 1,7 Teilen Diisobutylnaphthalin-1-sulfonsäuregemisch gegeben. Man fügte ca. 400 Teile Eis hinzu und ließ die Diazolösung bei 0 bis 5 °C langsam zulaufen. Nach beendeter Kupplung wurde die erhaltene Farbstoffsuspension auf 60 °C erhitzt, filtriert, der Filterkuchen mit Wasser neutral gewaschen und anschließend bei 60 °C im Vakuum getrocknet. Man erhielt 31,5 Teile des Farbstoffs der Formel

(Siehe Figur Seite 4 f.)

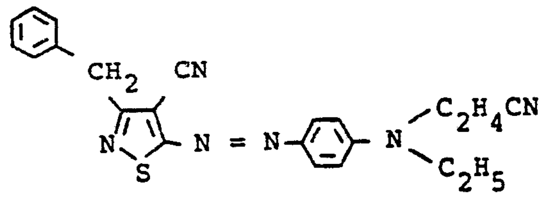

der auf Polyester blaustichig rote Färbungen mit sehr guten Echtheiten ergibt.

Beispiel 2

Eine Lösung von 25 Teilen N-Benzyl-N-cyanethyl-m-toluidin in 100 Teilen Dimethylformamid wurde in ein Gemisch aus 300 Teilen Wasser, 35 Teilen konzentrierter Salzsäure und 1,7 Teilen Diisobutylnaphthalin-1-sulfonsäuregemisch gegeben. Nach Zugabe von ca. 400 Teilen Eis ließ man eine analog Beispiel 1 aus 21,5 Teilen 5-Amino-3-benzyl-4-cyan-isothiazol bereitete Diazolösung langsam bei 0 bis 5 °C zulaufen und rührte bis zur beendeten Kupplung nach. Die Farbstoffsuspension wurde auf 50 °C erwärmt, filtriert und der Filterkuchen mit Wasser neutral gewaschen. Nach Trocknung im Vakuum bei 60 °C erhielt man 47 Teile des Farbstoffs der Formel

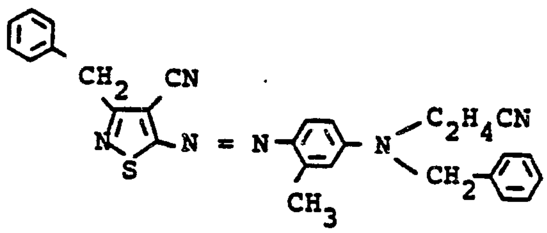

der auf Polyester blaustichig rote Färbung mit sehr guten Echtheiten liefert.

Beispiel 3

24,2 Teile 3-Methylsulfonylamino-N,N-diethylanilin wurden in 150 Teilen Dimethylformamid gelöst und in ein Gemisch aus 300 Teilen Wasser, 35 Teilen konzentrierter Salzsäure und 1,7 Teilen Diisobutylnaphthalin-1-sulfonsäuregemisch gegeben. Nach Zugabe von ca. 400 Teilen Eis ließ man eine analog Beispiel 1 aus 21.5 Teilen 5-Amino-3-benzyl-4-cyan-isothiazol bereitete Diazolösung bei 0 bis 5 °C langsam zulaufen. Nach Ende der Kupplung wurde die Farbstoffsuspension auf 50 °C erwärmt, filtriert und der Filterkuchen mit Wasser neutral gewaschen. Man trocknete im Vakuum bei 50 °C und erhielt 40,5 Teile des Farbstoffs der Formel

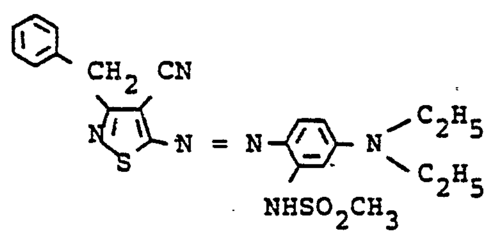

der Polyester in klaren rotvioletten Tönen mit sehr guter Echtheit färbt.

Beispiel 4

25,0 Teile Ethyl-n-propylaminocarbonyloxyethylanilin wurden in 20 Teilen Dimethylformamid und 40 Teilen 32 proz. Salzsäure gelöst und in ein Gemisch aus 300 Teilen Wasser und 1,2 Teilen Diisobutylnaphthalin-1-sulfonsäuregemisch gegeben. Nach Zusatz von 400 Teilen Eis ließ man eine analog Beispiel 1 aus 21,5 Teilen 5-Amino-3-benzyl-4-cyanisothiazol bereitete Lösung bei ca. 0 °C langsam zufließen. Nach Ende der Kupplung wurde der Farbstoff abfiltriert und neutral gewaschen. Nach Trocknung im Vakuum bei 50 °C wurden 42,4 Teile des Farbstoffs der Formel

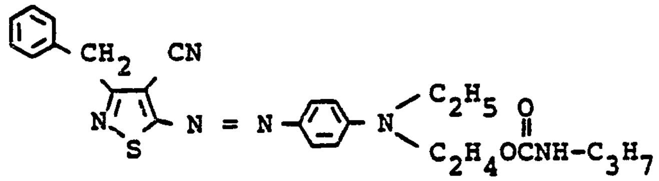

erhalten, der Polyester in klaren blaustichig roten Tönen mit sehr guten Echtheiten anfärbt.

Beispiel 5

33,6 Teile Cyanethyl-ethyloxyethyloxycarbonyloxyethylanilin wurden in 40 Teilen 32 %iger Salzsäure gelöst und in ein Gemisch aus 300 Teilen Wasser und 1,2 Teilen Diisobutylnaphthalin-1-sulfonsäuregemisch gegeben. Nach Zusatz von 400 Teilen Eis ließ man eine analog Beispiel 1 aus 21,5 Teilen 5-Amino-3-benzyl-4-cyanisothiazol bereitete Lösung bei max. 0 °C langsam zutropfen. Nach Beendigung der Kupplung wurde der gebildete Farbstoff abgesaugt und neutral gewaschen. Nach Trocknung bei 50 °C Vakuum erhielt man 47 Teile des Farbstoffs der Formel

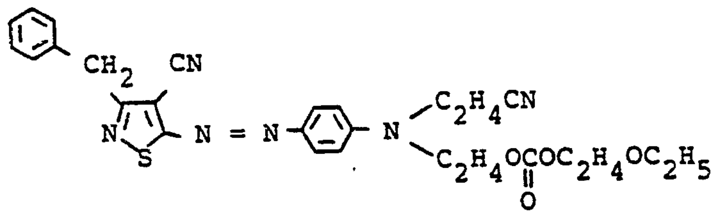

der Polyester in klaren roten Tönen mit sehr guten Echtheiten anfärbt.

Analog wurden auch die in der folgenden Tabelle durch Diazo- und Kupplungskomponente gekennzeichneten Farbstoffe erhalten.

(Siehe Tabelle Seite 6 ff.)

Tabelle

D-N=N-K

| Bsp. Nr. | D | K | Färbung auf Polyester |
|---|---|---|---|
| 6 | 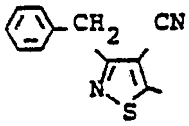 | 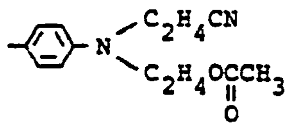 | rot |
| 7 | " | 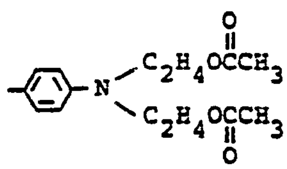 | rot |
| 8 | " | 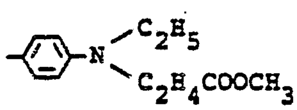 | blaustichig rot |
| 9 | " | 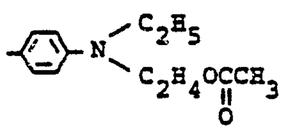 | blaustichig rot |
| 10 | " | 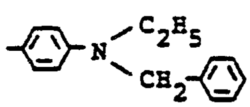 | blaustichig rot |
| 11 | " | 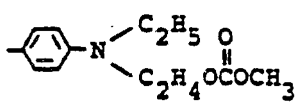 | blaustichig rot |
| 12 | " | 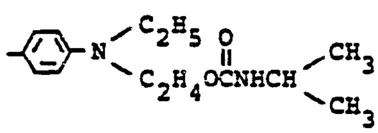 | blaustichig rot |
| 13 | " | 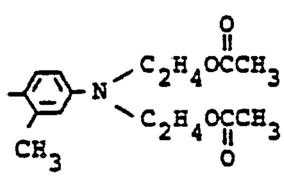 | blaustichig rot |

Tabelle (Fortsetzung)

D-N=N-K

| Bsp. Nr. | D | K | Färbung auf Polyester |
|---|---|---|---|
| 14 | 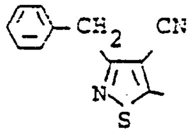 | 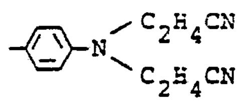 | rot |
| 15 | " | 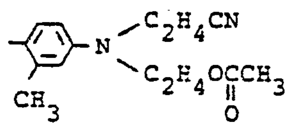 | rot |
| 16 | " | 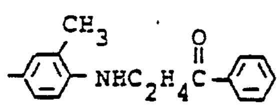 | rot |
| 17 | " | 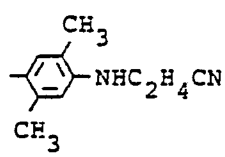 | blaustichig rot |
| 18 | " | 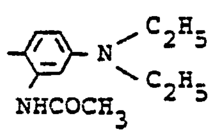 | violett |
| 19 | " | 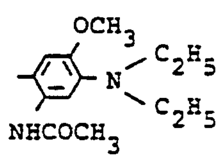 | blauviolett |
| 20 | " | 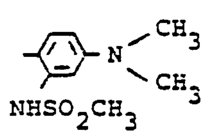 | rotviolett |

Tabelle (Fortsetzung)

D-N=N-K

| Bsp. Nr. | D | K | Färbung auf Polyester |
|---|---|---|---|
| 21 | 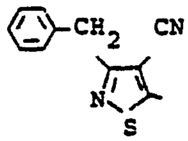 | 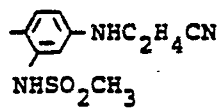 | rot |
| 22 | " | 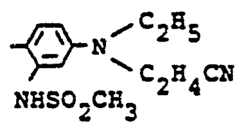 | blaustichig rot |
| 23 | " | 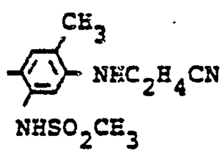 | blaustichig rot |
| 24 | " | 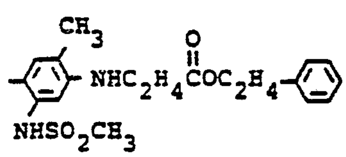 | blaustichig rot |
| 25 | " | 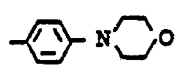 | rot |
| 26 | " | 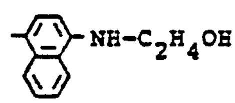 | rotstichig blau |
| 27 | " | 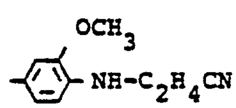 | rot |
| 28 | " | 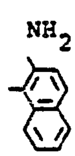 | rot |

Tabelle (Fortsetzung)

D-N=N-K

| Bsp. Nr. | D | K | Färbung auf Polyester |
|---|---|---|---|
| 29 | 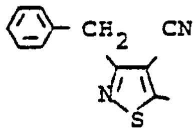 | 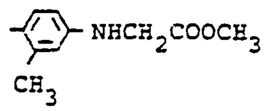 | rot |
| 30 | " | 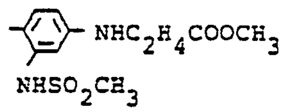 | blaustichig rot |
| 31 | " | 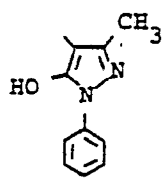 | gelb |
| 32 | " | 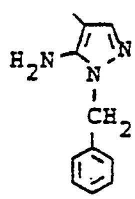 | gelb |
| 33 | " | 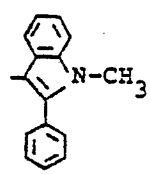 | orange |

Tabelle (Fortsetzung)

D-N=N-K

| Bsp. Nr. | D | K | Färbung auf Polyester |
|---|---|---|---|
| 34 | 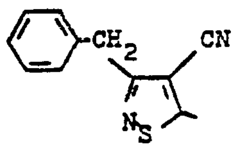 | 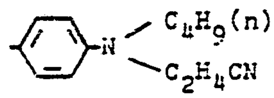 | blaustichig rot |
| 35 | " | 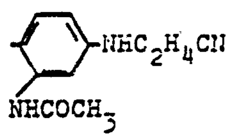 | rot |
| 36 | " | 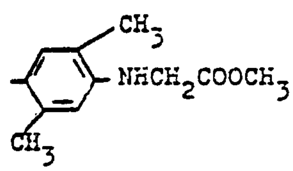 | rot |
| 37 | " | 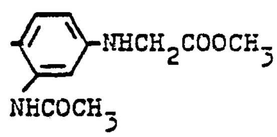 | blaustichig rot |
| 38 | " | 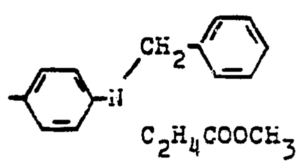 | blaustichig rot |
| 39 | " | 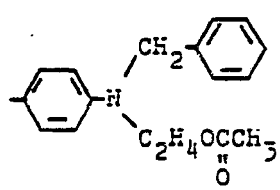 | blaustichig rot |
| 40 | " | 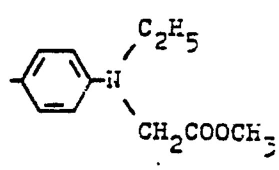 | rot |

Tabelle (Fortsetzung)

D-N=N-K

| Bsp. Nr. | D | K | Färbung auf Polyester |
|---|---|---|---|
| 41 | 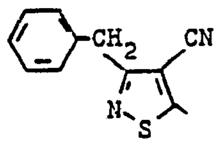 | 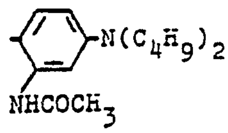 | violett |
| 42 | " | 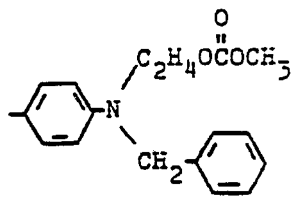 | rot |
| 43 | " | 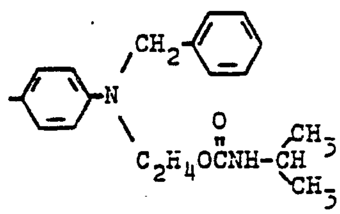 | blaustichig rot |
| 44 | " | 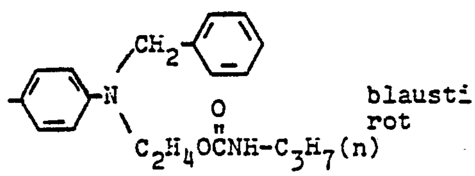 | blaustichig rot |
| 45 | " | 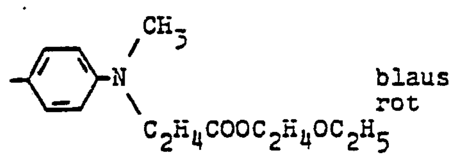 | blaustichig rot |
| 46 | " | 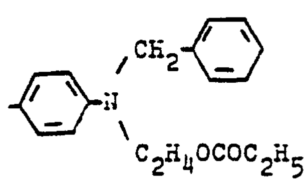 | rot |

Tabelle (Fortsetzung)

D-N=N-K

| Bsp. Nr. | D | K | Färbung auf Polyester |
|---|---|---|---|
| 47 | 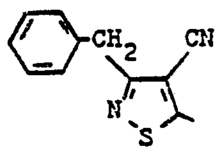 | 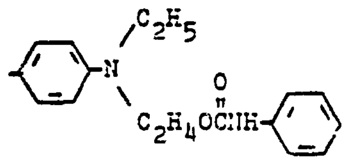 | violett |
| 48 | " | 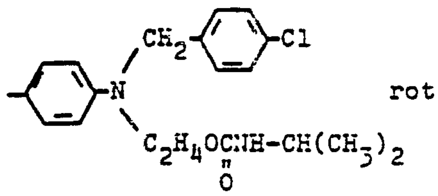 | rot |
| 49 | " | 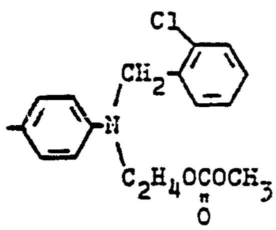 | rot |
| 50 | " | 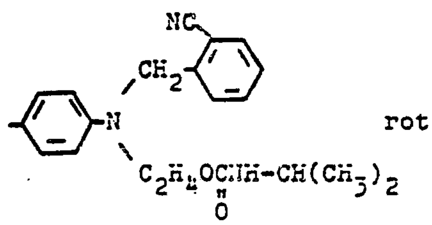 | rot |
| 51 | " | 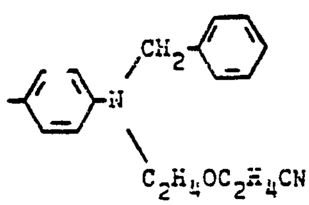 | blaustichig rot |
| 52 | " | 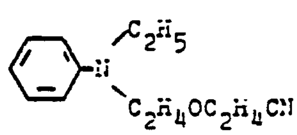 | violett |

Tabelle (Fortsetzung)

D-N=N-K

| Bsp. Nr. | D | K | Färbung auf Polyester |
|---|---|---|---|
| 53 | 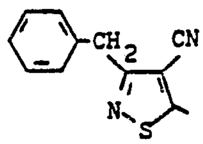 | 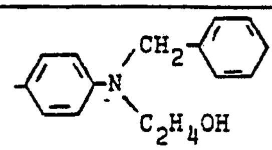 | blaustichig rot |
| 54 | " | 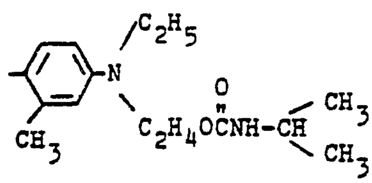 | violett |
| 55 | " | 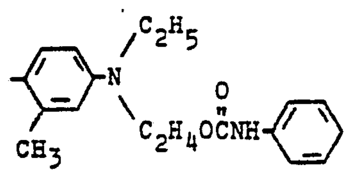 | violett |
| 56 | " | 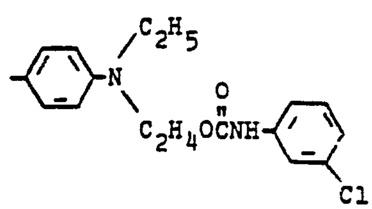 | violett |
| 57 | " | 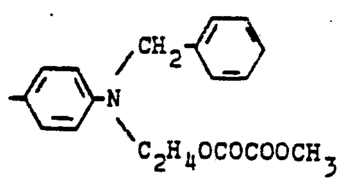 | blaustichig rot |
| 58 | " | 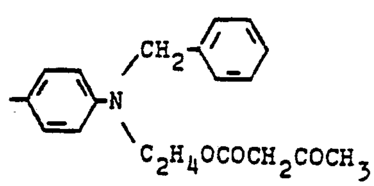 | blaustichig rot |

Tabelle (Fortsetzung)

D-N=N-K

| Bsp. Nr. | D | K | Färbung auf Polyester |
|---|---|---|---|
| 59 | 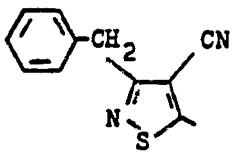 | 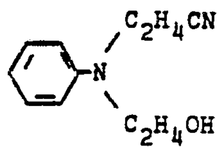 | rot |
| 60 | " | 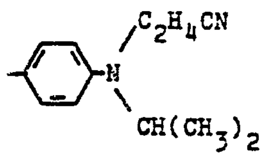 | rot |
| 61 | " | 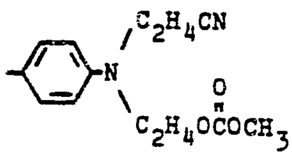 | rot |
| 62 | " | 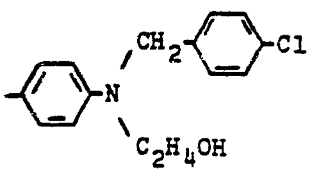 | rot |
| 63 | " | 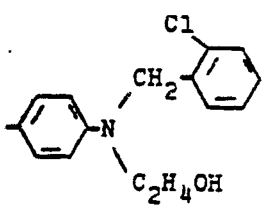 | rot |
| 64 | " | 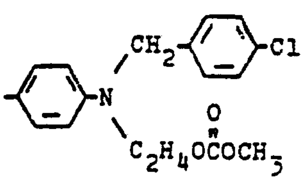 | rot |

Tabelle (Fortsetzung)

D-N=N-K

| Bsp. Nr. | D | K | Färbung auf Polyester |
|---|---|---|---|
| 65 | 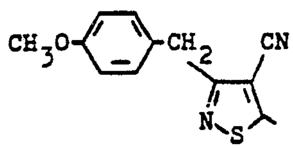 | 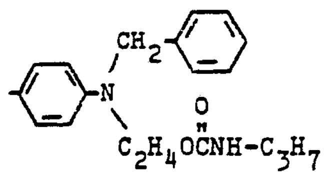 | blaustichig rot |
| 66 | " | 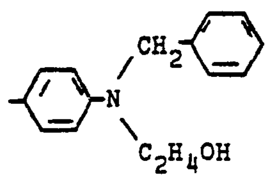 | blaustichig rot |
| 67 | " | 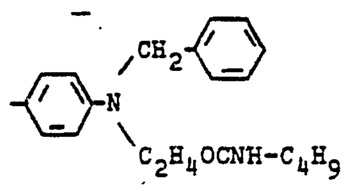 | blaustichig rot |
| 68 | " | 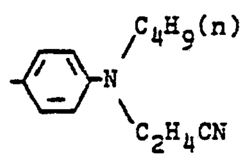 | blaustichig rot |
| 69 | " | 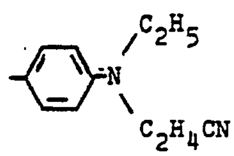 | blaustichig rot |
| 70 | " | 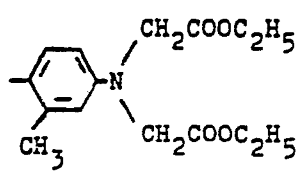 | rot |

Tabelle (Fortsetzung)

D-N=N-K

| Bsp. Nr. | D | K | Färbung auf Polyester |
|---|---|---|---|
| 71 | 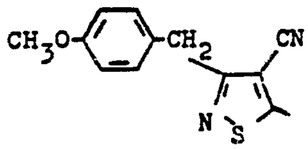 | 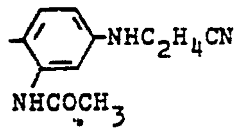 | blaustichig rot |
| 72 | " | 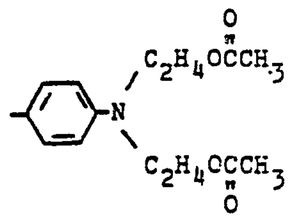 | blaustichig rot |
| 73 | " | 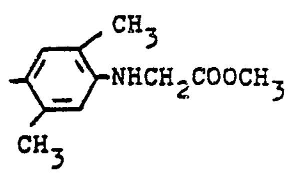 | rot |
| 74 | " | 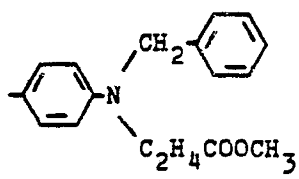 | blaustichig rot |
| 75 | " | 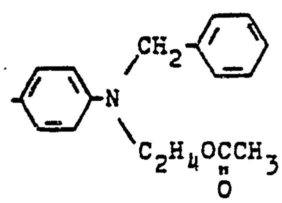 | blaustichig rot |
| 76 | " | 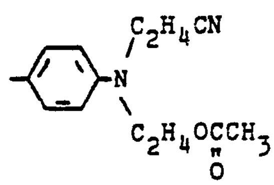 | rot |

Tabelle (Fortsetzung)

D-N=N-K

| Bsp. Nr. | D | K | Färbung auf Polyester |
|---|---|---|---|
| 77 | 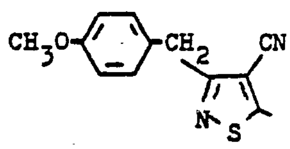 | 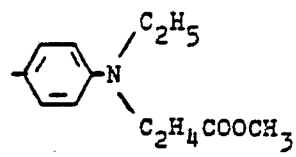 | blaustichig rot |
| 78 | " | 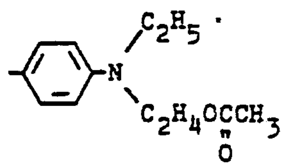 | blaustichig rot |

**Patentansprüche**

1. Isothiazolazofarbstoffe der allgemeinen Formel I

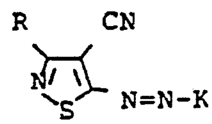

in der

R ein substituierter Alkylrest und

K der Rest einer von ungesättigten aliphatischen Resten freien Kupplungskomponente sind.

2. Verbindungen gemäß Anspruch 1 der Formel

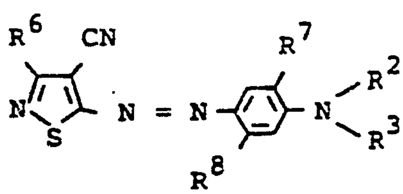

in der

$R^2$ Wasserstoff oder $R^3$,

$R^3$ gegebenenfalls substituiertes Alkyl, Aralkyl oder Aryl,

$R^6$ Benzyl, Phenethyl, o-, m-, p-Chlorbenzyl, o-, m-, p-Methoxy- oder -Ethoxybenzyl oder o-, m-, p-Nitrobenzyl,

$R^7$ Wasserstoff, Methyl, Methoxy, Ethoxy oder Chlor und

$R^8$ Wasserstoff, Methyl, Methoxy, Chlor, Acetylamino, Propionylamino, Methylsulfonylamino oder Dimethylaminosulfonylamino sind.

3. Verwendung der Verbindungen gemäß Anspruch 1 zum Färben und Bedrucken von Celluloseestern und synthetischen Polyestern.

**Claims**

1. An isothiazolazo dye of the general formula I

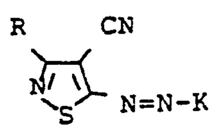

where

R is substituted alkyl and

K is the radical of a coupling component free from unsaturated aliphatic radicals.

2. A compound as claimed in claim 1, of the formula

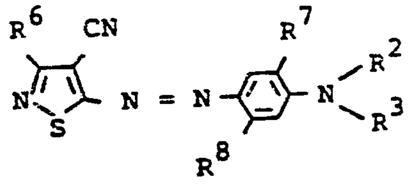

where

$R^2$ is hydrogen or $R^3$,

$R^3$ is unsubstituted or substituted alkyl, aralkyl or aryl,

$R^6$ is benzyl, phenethyl, o-, m- or p-chlorobenzyl, o-, m- or p-methoxybenzyl or -ethoxybenzyl or o-, m- or p-nitrobenzyl,

$R^7$ is hydrogen, methyl, methoxy, ethoxy or chlorine, and

$R^8$ is hydrogen, methyl, methoxy, chlorine, acetylamino, propionylamino, methylsulfonylamino or dimethylaminosulfonylamino.

3. The use of a compound as claimed in claim 1 for dyeing and printing cellulose esters and synthetic polyesters.

**Revendications**

1. Colorants azoïques d'isothiazole de formule générale I

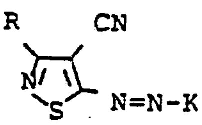

dans laquelle

R est un radical alkyle substitué et

K est le radical d'un composant de copulation exempt de radicaux aliphatiques insaturés.

2. Composés selon la revendication 1 de formule

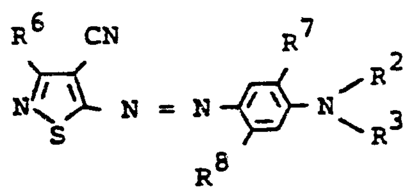

dans laquelle

$R^2$ est un atome d'hydrogène ou a la même signification que $R^3$,

$R^3$ est un radical alkyle éventuellement substitué, aralkyle ou aryle,

$R^6$ est un radical benzyle, phénéthyle, o-, m-, p-chlorobenzyle, o-, m-, p-méthoxy- ou -éthoxybenzyle ou o-, m-, p-nitrobenzyle,

$R^7$ est un atome d'hydrogène, un radical méthyle, méthoxy, éthoxy ou un atome de chlore et

$R^8$ est un atome d'hydrogène, un radical méthyle, méthoxy, un atome de chlore, un radical acétylamino, propionylamino, méthylsulfonylamino ou diméthylaminosulfonylamino.

3. Utilisation des composés selon la revendication 1 pour la teinture et l'impression sur esters cellulosiques et polyesters synthétiques.